# EUROPÄISCHE PATENTANMELDUNG

(11) **EP 2 684 499 A2**
(43) Veröffentlichungstag der Anmeldung: **15.01.2014**
(21) Anmeldenummer: 13176115.7
(22) Anmeldetag: 11.07.2013
(51) Int. Cl.: A47L 1/02, A47L 1/08, A47L 13/26

(54) **Vorrichtung zum Reinigen von Oberflächen**

(30) Priorität: 11.07.2012 DE 102012212126
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Vorrichtung zum Reinigen von Oberflächen, umfassend zumindest eine Reinigungseinheit 10, wenigstens einen Fluidantrieb 22 mit einem Arbeitsraum 26 zum Antreiben der Reinigungseinheit 10, und zumindest eine Fluidzuführung 18 für den Fluidantrieb 22, wobei eine Wandung der Fluidzuführung 18 oder des Arbeitsraums 26 zumindest eine Öffnung 24 zur Zuführung eines Gases, insbesondere Luft, zur Leistungssteigerung des Fluidantriebs 22 aufweist.

## Beschreibung

Die Erfindung betrifft eine Vorrichtung zum Reinigen von Oberflächen, umfassend zumindest eine Reinigungseinheit, wenigstens einen Fluidantrieb mit einem Arbeitsraum zum Antreiben der Reinigungseinheit, und zumindest eine Fluidzuführung für den Fluidantrieb.

Derartige Vorrichtungen sind grundsätzlich bekannt.

Es ist eine Aufgabe der Erfindung, eine Vorrichtung zum Reinigen von Oberflächen hinsichtlich des Antriebs zu verbessern.

Die Aufgabe wird durch die kennzeichnenden Merkmale des Anspruchs 1 gelöst.

Es wurde überraschend festgestellt, dass durch das gezielte Einbringen wenigstens einer Öffnung bzw. eines Lochs in eine Wandung der Fluidzuführung oder des Arbeitsraumes das in der Fluidzuführung transportierte bzw. im Arbeitsraum befindliche Fluid, insbesondere eine Flüssigkeit, vorzugsweise Wasser, "weicher" gemacht werden kann.

Dabei wird ein Gas, insbesondere Luft, über die Öffnung in die Fluidzuführung oder den Arbeitsraum eingebracht. Das Gas kann vorzugsweise aus der Umgebung stammen. Es ist jedoch auch denkbar, beispielsweise gezielt Gas, gegebenenfalls unter Druck, in die Fluidzuführung bzw. den Arbeitsraum einzubringen. Insbesondere ein sich in der Fluidzuführung ausbreitender Fluidstrahl kann über die Öffnung aus der Umgebung Luft ansaugen.

Das mit Gas versetzte Fluid kann für den Fluidantrieb einen geringeren Widerstand aufweisen. Es wurde festgestellt, dass die Leistung des Fluidantriebs dadurch beispielsweise um 20 % bis 30 % gesteigert werden kann. Dies kann dadurch erklärt werden, dass z.B. das "weichere", mit Luft versetzte Wasser beweglichen Teilen des Fluidantriebs, beispielsweise einem Antriebsrad, einen geringeren Widerstand entgegensetzt, wobei die Leistung des zugeführten Fluids, insbesondere die zum Antreiben einer Turbine zur Verfügung stehende Energie eines Fluidstrahls, durch die erfindungsgemäße "Belüftung" nicht beeinträchtigt bzw. gemindert wird.

Das Einbringen einer Öffnung in die Wandung der Fluidzuführung bzw. des Arbeitsraumes ermöglicht somit auf einfache und kostengünstige Weise eine Leistungssteigerung des Fluidantriebs.

Die zumindest eine Öffnung kann auch nachträglich in die Wandung eingebracht, beispielsweise gebohrt oder gestanzt, werden. Dadurch können z.B. auch ältere Reinigungsvorrichtungen nachgerüstet werden.

Es ist auch denkbar, dass die Reinigungsvorrichtung mehrere Reinigungseinheiten mit jeweils einem oder mehreren Fluidantrieben umfasst.

Bevorzugte Ausführungsformen sind den abhängigen Ansprüchen sowie der Beschreibung zu entnehmen.

Die Vorrichtung kann zum, insbesondere manuellen, Reinigen von Oberflächen verwendet werden. Insbesondere können damit geneigte Flächen, bevorzugt Oberflächen von Solar- oder Photovoltaikanlagen, gereinigt werden.

Die Reinigungseinheit kann eine Bürste und/oder eine Walze, bevorzugt eine, insbesondere langgestreckte, Bürstenwalze, umfassen.

Der Fluidantrieb kann eine Turbine und/oder ein Getriebe umfassen, mit der bzw. dem die Reinigungseinheit angetrieben werden kann. Die Reinigungseinheit kann durch den Fluidantrieb insbesondere in Rotation versetzt werden.

Das Fluid, welches das Turbinen- oder Schaufelrad beaufschlagt, kann auch als Reinigungsfluid verwendet werden. Das Fluid gelangt dabei insbesondere nach der Beaufschlagung eines Turbinen- oder Schaufelrads des Fluidantriebs in die Reinigungseinheit, insbesondere zu den Bürsten der Bürstenwalze.

Der Fluidantrieb kann in die Reinigungseinheit integriert sein. Es ist auch denkbar, lediglich einen Teil des Fluidantriebs in die Reinigungseinheit zu integrieren. Alternativ kann auch ein separater Fluidantrieb vorgesehen sein, bei dem die erzeugte Rotationsbewegung beispielsweise über Riemen zur Reinigungseinheit übertragen wird.

Es kann vorgesehen sein, dass im Arbeitsraum wenigstens ein vom zugeführten Fluid beaufschlagbares Antriebsrad, insbesondere ein Turbinen- oder Schaufelrad, angeordnet ist und der Arbeitsraum von einem Gehäuse begrenzt ist, wobei durch das Antriebsrad und das Gehäuse ein Ringbereich definiert ist und das Gehäuse am Ringbereich wenigstens eine Öffnung zum Abführen für das Fluid aufweist.

Durch diese radial außen gelegene Abführung kann das Fluid, nachdem es seine Antriebsarbeit am Antriebsrad verrichtet hat, rasch aus dem Arbeitsraum entweichen, wodurch verhindert wird, dass das Antriebsrad durch das Fluid gebremst wird.

Die Erfindung wird im Folgenden beispielhaft unter Bezugnahme auf die Zeichnungen beschrieben. Es zeigen:
- Fig. 1: eine Schnittansicht einer ersten Ausführungsform einer erfindungsgemäßen Vorrichtung,
- Fig. 2: eine Schnittansicht einer zweiten Ausführungsform einer erfindungsgemäßen Vorrichtung, und
- Fig. 3: eine Detailansicht eines erfindungsgemäßen Fluidantriebs gemäß Fig. 2.

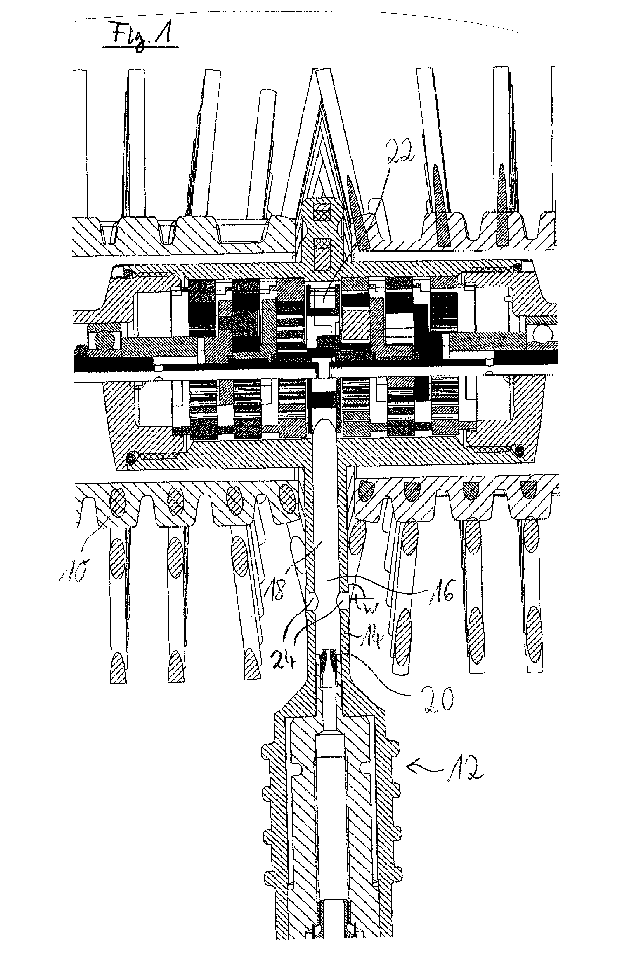

Fig. 1 zeigt eine Reinigungsvorrichtung mit einer als Bürstenwalze 10 ausgebildeten Reinigungseinheit, welche an einer langgestreckten Haltestange 12, die ein Halteelement bildet, angeordnet ist. Die Haltestange 12 ist rohrförmig ausgebildet und umfasst eine Wandung 14, welche einen Innenraum 16 begrenzt. In diesem Ausführungsbeispiel bildet die Haltestange 12 somit eine Fluidzuführung 18 zur Zuführung von Fluid zur Bürstenwalze 10. Dabei gelangt das Fluid über eine Düse 20, welche als eine Ausstoßeinrichtung fungiert, in die Fluidzuführung 18. Schließlich wird das Fluid einem Fluidantrieb 22 zugeführt, welcher zentral in die Bürstenwalze 10 integriert ist und die Bürstenwalze 10 in Rotation versetzt. Dabei treibt ein ausgestoßener Fluidstrahl ein Turbinen- oder Schaufelrad des Fluidantriebs 22 an. Das Fluid gelangt anschließend vom Turbinen- bzw. Schaufelrad axial nach außen in die Bürstenwalze 10, um als Reinigungsfluid zu dienen.

Zur Steigerung der Leistung des Fluidantriebs 22 weist die Fluidzuführung 18 Bohrungen 24 in der Wandung 14 auf. Die Bohrungen 24 können beispielsweise als zylinderförmige Öffnungen mit einer im Wesentlichen kreisförmigen Grundfläche ausgebildet sein. Auch elliptische oder eckige Öffnungen 24 sind denkbar.

Insbesondere können zumindest zwei, vorzugsweise identisch ausgebildete, Bohrungen 24 an gegenüberliegenden Seiten der Wandung 14 der Fluidzuführung 18 angeordnet sein, insbesondere auf gleicher Höhe.

Alternativ zur dargestellten Ausführungsform sind auch mehr als zwei bzw. nur eine einzige Bohrung 24 denkbar.

Die Bohrung 24 verläuft insbesondere senkrecht zur Fluidzuführung 18, kann jedoch auch schräg dazu verlaufen. So sind beispielsweise Winkel W bezüglich einer Strömungsrichtung des Fluids in der Fluidzuführung 18 von mindestens 80°, vorzugsweise 135°, denkbar. Ein Winkel W von grö-ßer gleich 90° kann das Einströmen von Gas in die Fluidzuführung 18 erleichtern.

Strömt ein Fluid über die Düse 20, beispielsweise über einen angeschlossenen Hochdruckreiniger, in den Innenraum 16 der Haltestange 12 ein, so nimmt der entstehende Wasserstrahl beim Passieren der Bohrung 24 Gas, beispielsweise Umgebungsluft, auf bzw. saugt die Luft an. Insbesondere über eine solche Sogwirkung wird Gas in den Innenraum 16 gefördert. Das Fluid in der Fluidzuführung 18 wird auf diese Weise mit Gas versetzt und somit weicher. Der zentrale Vollstrahl, welcher ca. 80 % bis 90 % des Fluidstrahls ausmacht, bleibt durch das zugeführte Gas im Wesentlichen unverändert bzw. ungestört, so dass die kinetische Energie des Fluidstrahls weiterhin genutzt werden kann. Lediglich der Randbereich des Strahls zieht das Gas über die Bohrungen 24 in den Innenraum 16 mit. Das mit Gas versetzte Fluid trifft anschließend auf Turbinen- oder Schaufelräder des Fluidantriebs 22 auf. Aufgrund des mitgeführten Gases wird der Widerstand für den Fluidantrieb 22 reduziert, d.h. das oder die Turbinen- bzw. Schaufelräder unterliegen einer deutlich geringeren Bremswirkung durch das Fluid als bei vergleichbaren Anordnungen ohne die durch die Bohrungen 24 bewirkte "Belüftung". Die erfindungsgemäße Belüftung kann eine Leistungssteigerung des Fluidantriebs 22 von ca. 20 bis 30 % ergeben, wie Versuche überraschend ergeben haben.

Wie bereits erwähnt, kann anschließend das Fluid aus dem Fluidantrieb 22 austreten und die Bürstenwalze 10 bzw. den zu reinigenden Gegenstand mit Reinigungsfluid versorgen.

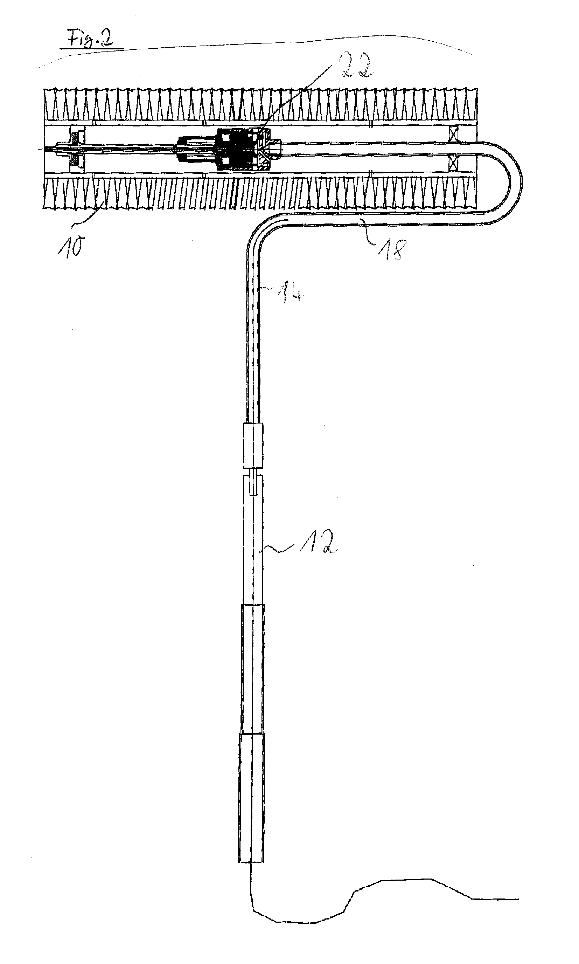

Fig. 2 zeigt eine alternative Ausführungsform der Erfindung. Die Reinigungsvorrichtung umfasst auch hier eine Bürstenwalze 10 sowie eine Haltestange 12, welche teleskopierbar ausgebildet sein kann. Alternativ ist auch eine steckbare Haltestange 12 denkbar.

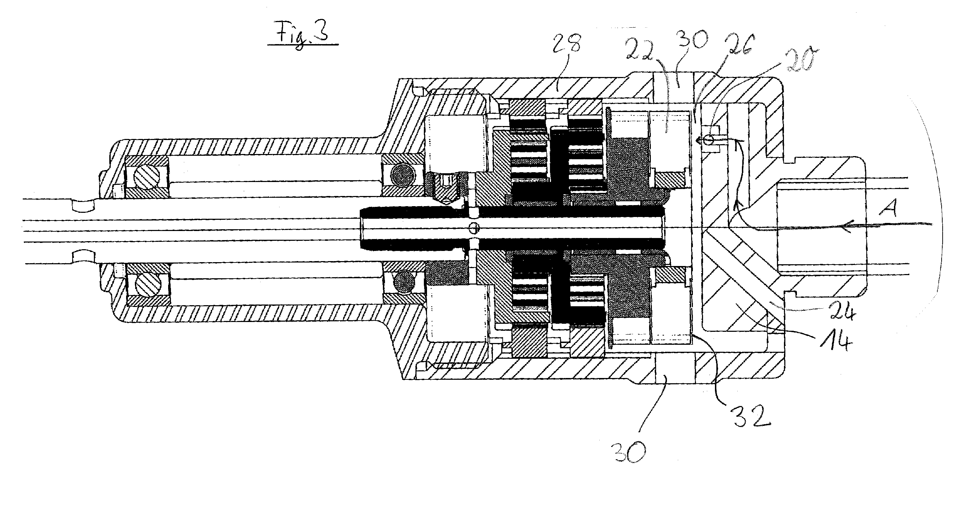

Über die Haltestange 12 wird ein Fluidantrieb 22, welcher zentral in der Bürstenwalze 10 angeordnet ist, mit Fluid versorgt. Eine vergrößerte Darstellung des Fluidantriebs ist in Fig. 3 gezeigt.

Das Fluid gelangt hierbei entlang der Strömungsrichtung A über eine Düse 20 in einen Arbeitsraum 26, welcher mit einer Wandung 14 umgeben ist. Im Arbeitsraum 26 ist ein Turbinen- oder Schaufelrad 32 des Fluidantriebs 22 angeordnet. Wird das Turbinen- oder Schaufelrad über die Düse 20 mit Fluid beaufschlagt, wird die Bürstenwalze 10 über ein Getriebe und eine Antriebswelle in Rotation versetzt.

Zur Leistungssteigerung weist die Wandung 14 des Arbeitsraums 26 eine Bohrung 24 auf, welche als Kanal ausgebildet ist, der sich schräg zur Antriebsachse erstreckt, die mit der Drehachse des Schaufelrades 22 zusammenfällt. Diese Belüftungsbohrung 24 mündet in den Arbeitsraum 26 an einem radial inneren Bereich nahe der Drehachse.

Der Querschnitt der Bohrung 24 kann dabei rund oder eckig sein. In Längsrichtung kann die Bohrung 24 gerade sein oder aber Kurven oder Krümmungen aufweisen. Über diese, insbesondere zylinderförmige, Bohrung 24, gelangt z.B. Umgebungsluft in den Arbeitsraum 26. Dadurch wird das Fluid, welches auf die Turbinen- oder Schaufelräder trifft, weicher. Die Leistung des Fluidantriebs 22 wird dadurch nachweisbar deutlich verbessert, obwohl das Fluid auf seinem Weg in den Arbeitsraum 26 - anders als in der Ausgestaltung gemäß Fig. 1 - hier mehrfach umgelenkt wird.

Erfindungsgemäß kann also die Haltestange 12 und/oder ein Gehäuse des Fluidantriebs 22 selbst mit zumindest einer Bohrung 24 zum Einbringen von Umgebungsluft ausgestattet werden, um durch diese "Belüftung" die Leistung des Fluidantriebs zu erhöhen.

Ein Gehäuse 28 des Fluidantriebs definiert zusammen mit dem Antriebsrad 32 einen Ringbereich und weist am Ringbereich mehrere in Umfangsrichtung verteilte Öffnungen 30 auf, durch welche das Fluid nach Beaufschlagen des Antriebsrades 32 rasch aus dem Arbeitsraum 26 entweichen kann. Hierdurch ergibt sich eine zusätzliche Leistungssteigerung, da das Antriebsrad 32 nicht durch sich ansammelndes, nur relativ langsam auf anderem Wege ablaufendes Fluid gebremst wird.

### Bezugszeichenliste

- 10: Bürstenwalze, Reinigungseinheit
- 12: Haltestange, Halteelement
- 14: Wandung
- 16: Innenraum
- 18: Fluidzuführung
- 20: Düse, Ausstoßeinrichtung
- 22: Fluidantrieb
- 24: Bohrung, Öffnung
- 26: Arbeitsraum
- 28: Gehäuse
- 30: Öffnung
- 32: Antriebsrad

- W: Winkel
- A: Strömungsrichtung

## Patentansprüche

1. Vorrichtung zum Reinigen von Oberflächen, umfassend zumindest eine Reinigungseinheit (10),
wenigstens einen Fluidantrieb (22) mit einem Arbeitsraum (26) zum Antreiben der Reinigungseinheit (10), und
zumindest eine Fluidzuführung (18) für den Fluidantrieb (22), **dadurch gekennzeichnet, dass** eine Wandung (14) der Fluidzuführung (18) oder des Arbeitsraums (26) zumindest eine Öffnung (24) zur Zuführung eines Gases, insbesondere Luft, zur Leistungssteigerung des Fluidantriebs (22) auf weist.

2. Vorrichtung nach Anspruch 1,
**dadurch gekennzeichnet, dass** der Fluidantrieb (22) wenigstens ein Turbinen- oder Schaufelrad umfasst, das von einem Strahl des zugeführten Fluids beaufschlagt wird, wobei insbesondere der Strahl von einer in die Fluidzuführung (18) integrierten Ausstoßeinrichtung (20), bevorzugt einer Düse, erzeugt wird.

3. Vorrichtung nach Anspruch 1 oder 2,
**dadurch gekennzeichnet, dass** die Öffnung (24) in einem, bevorzugt sich geradlinig erstreckenden, Strahlbereich der Fluidzuführung (18) angeordnet ist, insbesondere in einem Bereich zwischen einer Ausstoßeinrichtung (20) und einem Turbinen- oder Schaufelrad.

4. Vorrichtung nach einem der vorstehenden Ansprüche,
**dadurch gekennzeichnet, dass** die Öffnung (24) derart in der Wandung (14) angeordnet ist, dass das Gas unter einem Winkel (W) von mindestens 80°, insbesondere mindestens 90°, vorzugsweise 135°, bezüglich einer Strömungsrichtung des Fluids in der Fluidzuführung (18) zugeführt wird.

5. Vorrichtung nach einem der vorstehenden Ansprüche,
**dadurch gekennzeichnet, dass** im Arbeitsraum (26) wenigstens ein Turbinen- oder Schaufelrad des Fluidantriebs (22) angeordnet ist.

6. Vorrichtung nach einem der vorstehenden Ansprüche,
**dadurch gekennzeichnet, dass** die Öffnung (24) unmittelbar einen Innenraum (16) der Fluidzuführung (18) oder den Arbeitsraum (26) mit der Umgebung verbindet.

7. Vorrichtung nach einem der vorstehenden Ansprüche,
**dadurch gekennzeichnet, dass** die Öffnung (24) als Bohrung oder Kanal ausgebildet ist.

8. Vorrichtung nach einem der vorstehenden Ansprüche,
**dadurch gekennzeichnet, dass** die Öffnung (24) einen Querschnitt mit einer maximalen Abmessung, insbesondere einem Durchmesser, von 0,1 cm bis 3 cm auf weist.

9. Vorrichtung nach einem der vorstehenden Ansprüche,
**dadurch gekennzeichnet, dass** die Fluidzuführung (18) als Halteelement (12) für die Reinigungseinheit (10) ausgebildet ist.

10. Vorrichtung nach einem der vorstehenden Ansprüche,
**dadurch gekennzeichnet, dass** dass im Arbeitsraum (26) wenigstens ein vom zugeführten Fluid beaufschlagbares Antriebsrad (32), insbesondere ein Turbinen- oder Schaufelrad, angeordnet ist und der Arbeitsraum (26) von einem Gehäuse (28) begrenzt ist, wobei durch das Antriebsrad (32) und das Gehäuse (28) ein Ringbereich definiert ist und das Gehäuse (28) am Ringbereich wenigstens eine Öffnung (30) zum Abführen für das Fluid aufweist.
